# EUROPÄISCHE PATENTSCHRIFT

(11) **EP 3 157 789 B1**
(45) Veröffentlichungstag und Bekanntmachung des Hinweises auf die Patenterteilung: **30.09.2020**
(21) Anmeldenummer: 15725647.0
(22) Anmeldetag: 02.06.2015
(51) Int. Cl.: B60T 15/18, B60T 15/20, B60T 13/02, B60T 15/02

(54) **DOPPELKOLBENRELAISVENTIL MIT ANTI-COMPOUND-FUNKTION**
DUAL-PISTON RELAY VALVE HAVING AN ANTI-COMPOUNDING FUNCTION
VALVE-RELAIS À DOUBLE PISTON À FONCTION ANTI-COMPOUND

(30) Priorität: 18.06.2014 DE 102014108558
(43) Veröffentlichungstag der Anmeldung: 26.04.2017
(73) Patentinhaber: KNORR-BREMSE Systeme für Nutzfahrzeuge GmbH, 80809 München (DE)
(72) Erfinder: SCHNITTGER, Karsten, 80935 München (DE); KAUPERT, Oliver, 80995 München (DE); WYEN, Stefan, 78343 Gaienhofen (DE); USLU, Mustafa, 80997 München (DE)
(86) Internationale Anmeldenummer: PCT/EP2015/062225
(87) Internationale Veröffentlichungsnummer: WO 2015/193102

(56) Entgegenhaltungen:
- EP-A1- 0 407 751
- EP-A1- 0 540 852
- EP-A1- 2 407 355
- EP-A2- 0 131 683
- CH-A- 492 587
- DE-A1- 2 931 360
- DE-A1- 3 605 444
- DE-A1-102007 051 150
- DE-U- 1 980 549
- FR-A1- 2 354 227
- US-A- 6 116 280

## Beschreibung

### GEBIET DER ERFINDUNG

Die Erfindung betrifft ein Relaisventil für ein Fahrzeug, umfassend einen axial in einem Gehäuse beweglichen Parkbremskolben und einer axial beweglichen Manschette, wobei zwischen dem Parkbremskolben und dem Gehäuse eine erste Druckluftkammer zur Aufnahme von Druckluft aus einer Steuerleitung ausgebildet ist, wobei ferner ein erstes Federelement vorgesehen ist, das die Manschette axial mit einer Vorspannkraft beaufschlagt, und wobei ein zweites Federelement vorgesehen ist, das den Parkbremskolben axial mit einer weiteren Vorspannkraft beaufschlagt. Die Erfindung betrifft ferner ein Verfahren zum Betrieb eines solchen Relaisventils.

Ein solches Relaisventil kommt vornehmlich in Parkbremseinrichtungen für Nutzfahrzeuge zum Einsatz, um eine sichere Anti-Compound-Funktion zu realisieren.

Parkbremsen - auch Feststellbremse genannt - von Nutzfahrzeugen einschließlich Anhängern aber auch Schienenfahrzeugen sind heute regelmäßig mit Federspeicherbremszylinder ausgestattet, die in Lösestellung einen Federkompressionsraum mit Druckluft beaufschlagen und dadurch die Feder gespannt halten, während zum Parkbremsen der Federkompressionsraum entlüftet, d.h. mit Atmosphärendruck verbunden wird, so dass der Bremszylinder unter Wirkung der Feder eine Bremskraft erzeugt (vgl. Bosch, Kraftfahrtechnisches Taschenbuch, 22. Auflage, Düsseldorf, 1995, S. 648).

In heutigen Bremssystemen für Nutzfahrzeuge werden für die Parkbremsfunktion Relaisventile in Kombination mit Federspeicherbremszylinder verbaut. Im Parkzustand des Fahrzeugs wird die Steuerleitung des Relaisventils entlüftet, so dass auch die Federspeicher entlüftet sind. Starke Federn in den Federspeichern drücken die Bremsbeläge gegen die Bremsscheibe. Diese Federkräfte müssen die Bremssättel aufnehmen, was zu hohen Spannungen in den Bremssätteln führt.

Wenn im Parkzustand bei fehlender Anti-Compound-Funktion zusätzlich die Betriebsbremse betätigt würde, würden die Bremsbeläge zusätzlich auch pneumatisch gegen die Bremsscheibe gedrückt werden. Diese Kräfte müssten ebenfalls die Bremssättel aufnehmen, so dass es durch diese Überlagerung zu einer Überlastung der Bremssättel kommen würde.

Durch die Anti-Compound-Funktion wird diese Überlastung der Bremssättel verhindert. Eine Überlastung bei eingelegter Parkbremse und gleichzeitiger Betätigung der Betriebsbremse ist nicht mehr möglich, da die Kräfte am Bremssattel durch die Parkbremse im gleichen Maße reduziert werden, wie die Kräfte am Bremssattel durch die Betriebsbremse ansteigen. In der Regel wird dazu ein Wechselventil (Select High Ventil) in die Steuerleitung des Relaisventil eingebaut. Bei entlüfteter Steuerleitung des Relaisventils (Parkzustand) können die Bremsdrücke über das Select High Ventil in die Steuerleitung des Relaisventils gelangen. Der resultierende Druckanstieg in den Federspeichern reduziert die Bremskräfte der Parkbremse.

Aus der EP 2 240 352 B1 geht eine Parkbremseinrichtung für Kraftfahrzeuge mit einem von einem Relaisventil ansteuerbaren Federspeicher-Bremszylinder hervor. Das Relaisventil ist über ein als 3/2-Wegeventil ausgebildetes Sicherheitsventil ansteuerbar, dessen Ausgang wahlweise mit einem von zwei Eingängen verbindbar ist, wobei die Eingänge des Sicherheitsventils über ein erstes oder ein zweites Magnetventil, wahlweise mit einer Druckmittelquelle oder Atmosphärendruck, verbindbar sind. Ein Select-Low-Ventil ist mit dem einen Eingang und dem Ausgang des Sicherheitsventils verbunden und ein Ausgang des Select-Low-Ventils ist mit einem Steuereingang des Relaisventils verbunden. Eine Anti-Compound-Funktion wird dadurch erreicht, dass zwischen das Select-Low-Ventil und den pneumatischen Steuereingang des Relaisventils noch ein Select-High-Ventil geschaltet wird, dessen einem Eingang der Ausgang des Select-Low-Ventils und dessen anderem Eingang der Druck der Betriebsbremse zugeführt wird. Das Select-High-Ventil wählt den höheren von beiden Drücken aus und führt diesen dem Steuereingang des Relaisventils zu. Damit ist sichergestellt, dass der Steuereingang des Relaisventils stets nur mit einem eindeutig definierten Druck beaufschlagt ist und dass die Betriebsbremse Vorrang vor der Parkbremse hat.

Ferner geht aus der EP 2 407 355 B1 ein Relaisventil mit einem Steuerkolben und einer Manschette hervor, wobei beide in einer axialen Richtung beweglich sind. Es ist ein erstes elastisches Element vorgesehen, das die Manschette in der axialen Richtung mit einer Vorspannkraft beaufschlagt, und ferner auch ein zweites elastisches Element, das den Steuerkolben in der axialen Richtung mit einer weiteren Vorspannkraft beaufschlagt. Eine Steuerleitung des elektrisch betätigbaren Feststellbremssystems, indem das Relaisventil angeordnet ist, steht über eine Relaissteuerleitung und ein Wechselventil mit dem Relaissteuereingang des Relaisventils in Verbindung. An dem Wechselventil ist ferner eine Betriebsbremsleitung angeschlossen. Der Betriebsbremsdruck wird über das Wechselventil an das Relaisventil eingesteuert. Dieses gibt entsprechend der Ansteuerung Druck in die Federspeicher ab, der gegen Federkraft und Betriebsbremsdruck arbeitet und diese größtenteils kompensiert. Eine Überbelastung der Bauteile kann so vermieden werden. Das erste elastische Element dient zum Versatz der Kennlinie. Der Versatz der Kennlinie wird erforderlich durch eine Steuerventileinrichtung, ein sogenanntes PCV-Ventil. Dieses schaltet von der Fahrstellung ab einem gewissen Steuerdruck in die Parkstellung. Eine Hilfsbremswirkung wird dadurch realisiert, dass in der Fahrstellung der Steuerdruck abgesenkt ist. Damit die Steuerventileinrichtung in der Fahrstellung bleibt und am Ausgang des Relaisventils ein möglichst niedriger Druck erreicht wird, existiert ein Versatz der Relaisventilkennlinie. Dieser Versatz hat den Nachteil, dass bei einer Anti-Compound-Funktion über ein Select-High-Ventil die Entlastung der Bremssättel durch eine Befüllung der Federspeicher zu langsam geschieht. Dadurch entsteht trotz Anti-Compound-Funktion in gewissen Situationen eine Überlast am Bremssattel.

Die DE 29 31 360 A1 offenbart ein Relaisventil mit einem Parkbremskolben sowie einem Betriebsbremskolben, denen jeweils ein eigener Druckluftanschluss zugeordnet ist. Beide Druckluftanschlüsse sind in axialer Fortbildung des Ventilgehäuses angeordnet, so dass dieses recht langbauend ausfällt. Die auf diese Weise von axialer Richtung her dem Betriebsbremskolben zugeführte Druckluft passiert zunächst einen hohlzylindrischen zentralen Ansatz des Parkbremskolbens, ehe diese auf die Kolbenfläche des Betriebsbremskolbens einwirkt.

Die CH 492 587 A offenbart ein Relaisventil, welches nach demselben Konstruktionsprinzip wie das vorstehend diskutierte Relaisventil aufgebaut ist. Neben den in axialer Fortbildung des Ventilgehäuses angeordneten Druckluftanschlüssen zur Beaufschlagung des Betriebsbremskolbens sowie des Parkbremskolbens ist eine ebenfalls recht langbauende zylindrische Ventilhülse zur Bildung eines Doppelsitzventils für die Be- und Entlüftung der Bremsdruckleitung vorgesehen, welche ebenfalls zur axialen Baulänge des Ventilgehäuses beiträgt.

Aus der DE 36 05 44 A1 geht ein Relaisventil hervor, dessen oberer Parkbremskolben über einen hülsenartigen Ansatz direkt auf die Ventilhülse eines Doppelsitzventils zum vorstehend erläuterten Zweck einwirkt. Dabei durchdringt der hülsenförmige Ansatz einen dazwischenliegenden Steuerkolben.

Aus der EP 0 131 683 A2 geht ein anderes Relaisventil hervor, welches zweikreisig betätigbar ist und hierfür drei einzelne ineinander verschachtelt angeordnete Kolben aufweist, welche auf ein hülsenförmig langgestrecktes Ventilelement einer Doppelsitzventilanordnung einwirken. Insgesamt sind hier recht viele Einzelbauteile vorgesehen.

### OFFENBARUNG DER ERFINDUNG

Die Aufgabe der vorliegenden Erfindung ist ein Relaisventil weiterzuentwickeln, um eine verbesserte Anti-Compound-Funktion zu realisieren.

Die Aufgabe wird ausgehend von einem Relaisventil gemäß dem Oberbegriff von Anspruch 1 in Verbindung mit dessen kennzeichnenden Merkmalen gelöst. Vorteilhafte Weiterbildungen der Erfindung gehen aus den nachfolgenden abhängigen Ansprüchen hervor.

Erfindungsgemäß ist axial zwischen dem Parkbremskolben und der Manschette ein axial beweglicher Betriebsbremskolben angeordnet, der zumindest radial an dem Parkbremskolben und radial am Gehäuse dichtend zur Anlage kommt, um eine zweite Druckluftkammer auszubilden. Dadurch wird der Nachteil einer Überlast des Relaisventils mit einem Kolben vermieden. Der Luftdruck aus einer mit einem Steueranschluss verbundenen Steuerleitung wirkt auf den Betriebsbremskolben ohne Versatz, aufgrund des elastischen Elements. Dadurch wird eine Anti-Compound-Kennlinie nicht verschoben, so dass die Anti-Compound-Funktion schneller erreicht wird. Ferner entfällt eine Ventileinheit, insbesondere das Select-High-Ventil. Dadurch sinken sowohl der Bauraumbedarf als auch der Montageaufwand.

Durch die entstandene Entlastungsfläche zwischen dem Parkbremskolben und dem Betriebsbremskolben wird die Anti-Compound-Kennlinie flacher. Das hat den Vorteil, dass der Ausgleich der Kräfte an der Bremszange linearer verläuft, so dass ein "roll-back-Effekt" vermieden wird. Der roll-back-Effekt kommt zum Vorschein wenn beispielsweise ein LKW am Berg steht und die Anti-Compound-Funktion im Parken wirkt. Wenn eine gewisse Kraft während des Ausgleichsvorgangs der Kräfte an der Bremszange unterschritten wird, rollt der LKW.

Das Gehäuse kann insbesondere aus mehreren, vorzugsweise aber zwei Teilgehäusen bestehen, die miteinander verbunden sind. Der Betriebsbremskolben bildet zusammen mit dem Parkbremskolben einen Doppelkolben aus. Vorteilhafterweise weisen der Parkbremskolben und der Betriebsbremskolben an ihrer Außenumfangsfläche eine umlaufende Nut auf, in der jeweils ein Dichtungselement, insbesondere ein O-Ring angeordnet ist, der die Druckkammern pneumatisch abdichtet. Ferner ist radial zwischen dem Parkbremskolben und dem Betriebsbremskolben ein weiteres Dichtungselement, insbesondere ein O-Ring angeordnet.

Es wird vorgeschlagen, dass die zweite Druckluftkammer unmittelbar mit Druckluft aus einer Betriebsbremsleitung, die an einer Betriebsbremse angeordnet ist, speisbar ist. Mit anderen Worten befinden sich in der Betriebsbremsleitung zwischen dem Relaisventil und der Betriebsbremse keine weiteren Ventile oder ähnlich den Druck beeinflussende Elemente, wie z.B. ein Select-High-Ventil oder ein Wechselventil. Mithin wird die Anti-Compound-Funktion direkt im Relaisventil durch die Funktionsweise des Doppelkolbens realisiert.

Vorzugsweise ist eine dritte Druckluftkammer zur Einstellung des Luftdrucks in einer über einen Belüftungsanschluss verbundenen Ausgangsleitung zwischen dem Betriebsbremskolben, dem Gehäuse und der Manschette ausgebildet. Der Luftdruck in der dritten Druckluftkammer wirkt somit auf einer Stirnfläche des Betriebsbremskolbens, dem Luftdruck in der zweiten Druckluftkammer entgegen. Ferner wirkt aber auch der Parkbremskolben axial auf den Servicekolben.

Des Weiteren bevorzugt ist, dass axial zwischen einem gehäuseseitigen Ventilsitz und der Manschette ein pneumatischer Einlass von Druckluft aus einer über einen Versorgungsanschluss verbundenen Versorgungsleitung zur Belüftung der dritten Druckluftkammer ausbildbar ist. Mit anderen Worten ist der Ventilsitz, an dem die Manschette aufgrund der Vorspannkraft des Federelements zur Anlage kommt am Gehäuse ausgebildet. Wenn die Manschette gegen die Vorspannkraft des Federelements axial verschoben wird, öffnet sich der Einlass, so dass Druckluft aus der Versorgungsleitung zur Belüftung der dritten Kammer einströmt.

Die Erfindung schließt die technische Lehre ein, dass axial zwischen einem am Betriebsbremskolben ausgebildeten Ventilsitz und der Manschette ein pneumatischer Auslass zur Entlüftung der dritten Kammer ausbildbar ist. Sofern die dritte Kammer entlüftet ist, sind auch die Federspeicherbremszylinder entlüftet, so dass die Bremse wirkt. Der pneumatische Auslass wird dadurch geschlossen, dass der Betriebsbremskolben axial an der Manschette zur Anlage kommt.

Ferner wird ein Verfahren zum Betrieb eines Relaisventils vorgeschlagen, das mindestens fünf Betriebsmodi umfasst, nämlich den Betrieb des Relaisventils:
- bei einem Parkzustand des Fahrzeugs,
- bei einer Betätigung der Betriebsbremse während des Parkzustands,
- bei einem Fahrzustand des Fahrzeugs,
- bei einer Senkung des an der Ausgangsleitung anliegenden Luftdruckes, und
- bei einer Erhöhung des an der Ausgangsleitung anliegenden Luftdruckes.

Bei einem Parkzustand des Fahrzeugs sind die Steuerleitung, die Betriebsbremsleitung und die Ausgangsleitung drucklos, wobei die Manschette axial am gehäuseseitigen Ventilsitz zur Anlage kommt und der Betriebsbremskolben axial von der Manschette beabstandet ist, so dass über den geöffneten Auslass die dritte Druckluftkammer entlüftet wird.

Bei einer Betätigung der Betriebsbremse während des Parkzustands des Fahrzeugs kommt der Betriebsbremskolben axial an die Manschette zur Anlage, wobei die Manschette gegen die Vorspannkraft des ersten Federelements axial verschoben wird, so dass der Einlass geöffnet wird und der Auslass geschlossen wird.

Bei einem Fahrzustand des Fahrzeugs werden die Steuerleitung, die Versorgungsleitung und die Ausgangsleitung mit Druckluft beaufschlagt, wobei der Betriebsbremskolben axial an die Manschette zur Anlage kommt, so dass der Einlass und der Auslass geschlossen werden.

Bei einer Senkung des an der Ausgangsleitung anliegenden Luftdruckes wird der Luftdruck in der ersten Druckluftkammer geregelt gesenkt, wobei der Betriebsbremskolben axial von der Manschette abhebt, so dass der Auslass geöffnet wird und die dritte Druckluftkammer geregelt entlüftet wird.

Bei einer Erhöhung des an der Ausgangsleitung anliegenden Luftdruckes wird der Luftdruck in der ersten Druckluftkammer geregelt erhöht, wobei der Betriebsbremskolben die Manschette gegen die Vorspannkraft des ersten Federelements axial verschiebt, so dass der Einlass geöffnet wird und die dritte Druckluftkammer geregelt belüftet wird.

### KURZE BESCHREIBUNG DER ZEICHNUNGEN

Weitere, die Erfindung verbessernde Maßnahmen werden nachstehend gemeinsam mit der Beschreibung bevorzugter Ausführungsbeispiele der Erfindung anhand der Figuren näher dargestellt. Es zeigen:
- Figur 1: ein schematisches Schaltbild eines erfindungsgemäßen elektrisch betätigbaren Feststellbremssystems, und
- Figur2: eine schematische Schnittdarstellung des erfindungsgemäßen Relaisventils aus Figur 1.

### DETAILLIERTE BESCHREIBUNG EINER BEVORZUGTEN AUSFÜHRUNGSFORM

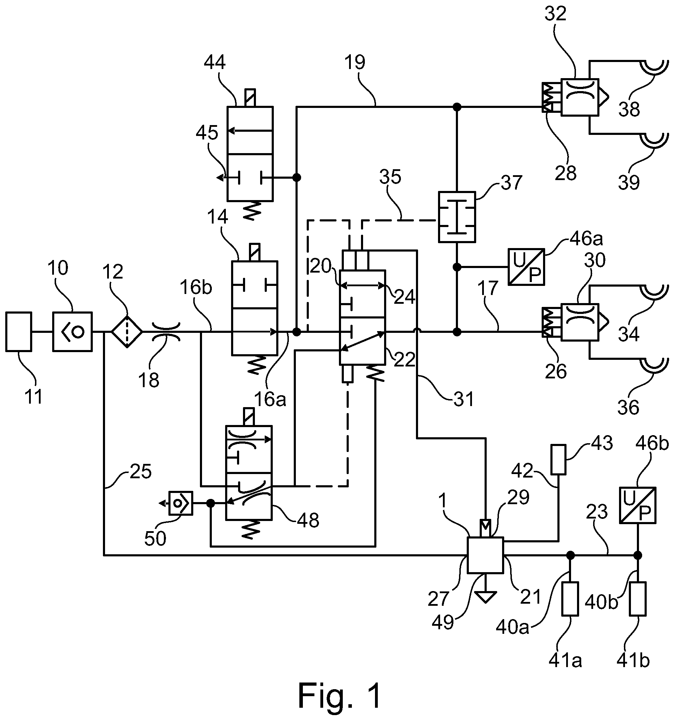

Gemäß Figur 1 ist das elektrisch betätigbare Feststellbremssystem über ein Rückschlagventil 10 mit einer Druckluftaufbereitungsanlage 11 verbunden. Auf das Rückschlagventil 10 folgt eine Filtereinheit 12, über die Druckluft über eine Drossel 18 einem Versorgungsmagnetventil 14, das als 2/2-Wegeventil ausgelegt ist, zugeführt wird. An den Ausgang des Versorgungsmagnetventils 14 ist über einen ersten Versorgungsleitungsabschnitt 16a ein erster Arbeitsanschluss 20 einer Steuerventileinrichtung 22 angeschlossen. Der Leitungsabschnitt mit der Filtereinheit 12 wird als zweiter Versorgungsleitungsabschnitt 16b bezeichnet. Die Steuerventileinrichtung 22 ist als pneumatisch ansteuerbares 3/2-Wegeventil ausgelegt. Ein zweiter Arbeitsanschluss 24 der Steuerventileinrichtung 22 führt über einen Anhängersteuerleitungszweig 17 zu einem Steuereingang 26 eines Anhängersteuermoduls 30. Dieses bedient einen Versorgungsanschluss 34 und einen Steueranschluss 36 der Anhängerkupplung. Ein Steuereingang 28 eines weiteren Anhängersteuermoduls 32 ist über einen weiteren Anhängersteuerleitungszweig 19 mit dem Versorgungsleitungszweig 16a verbunden. Das Anhängersteuermodul 32 hat einen Versorgungsanschluss 38 und einen Steueranschluss 39. Die Anhängersteuerleitungszweige 17, 19 sind mit Eingängen eines Select-Low-Ventils 37 verbunden, dessen Ausgang über eine Steuerleitung 35 mit einem Steuereingang 33 der Steuerventileinrichtung 22 verbunden ist. Das Select-Low-Ventil 37 arbeitet so, dass an seinem Ausgang, das heißt in der Steuerleitung 35, der niedrigere Eingangsdruck ansteht, das heißt der niedrigere Druck aus den beiden Anhängersteuerungsleitungszweigen 17, 19. Die Steuerleitung 35 steht weiterhin über eine Steuerleitung 31 mit dem Steuereingang 29 des Relaisventils 1 in Verbindung.

Das Relaisventil 1 bezieht an einem Versorgungsanschluss 27 über eine Versorgungsleitung 25 Druckluft von einer Stelle stromaufwärts des Versorgungsmagnetventils 14. Eine Ausgangsleitung 23 an einem Belüftungsanschluss 21 führt zu Leitungszweigen 40a, 40b, an denen Federspeicherbremszylinder 41a, 41b angeschlossen sind. An dem Relaisventil 1 ist ferner eine Betriebsbremsleitung 42 angeschlossen, die mit einer Betriebsbremse 43 pneumatisch verbunden ist. Beim Betätigen der Betriebsbremse 43 wird automatisch die Feststellbremse geöffnet, um eine Überlastung der Federspeicherbremszylinder 41a, 41b zu verhindern.

Weiterhin ist ein als ein 2/2-Wegeventil ausgelegtes Entlüftungsmagnetventil 44 vorgesehen, das über den weiteren Anhängersteuerleitungszweig 19 mit dem Versorgungsleitungsabschnitt 16a verbunden ist. Das Entlüftungsmagnetventil 44 weist einen Entlüftungsmagnetventilanschluss 45 auf, der in einer Entlüftung mündet. Es sind ferner Drucksensoren 46a, 46b zum Erfassen der Drücke an dem zweiten Arbeitsanschluss 24 der Steuerventileinrichtung 22 sowie der Ausgangsleitung 23 vorgesehen. Steuerräume der Steuerventileinrichtung 22 sind über eine Druckausgleichsleitung 47 mit einer Entlüftung verbunden.

Bei dem dargestellten Schaltzustand des elektrisch betätigbaren Feststellbremssystems befinden sich das Versorgungsmagnetventil 14, die Steuerventileinrichtung 22, das Entlüftungsmagnetventil 44 und die Steuer- und Entlüftungsventileinrichtung 48 jeweils in einer ersten Schaltposition. Der zweite Arbeitsanschluss 24 der Steuerventileinrichtung 22 ist über eine Steuer- und Entlüftungsventileinrichtung 48 entlüftet, so dass in Abwesenheit einer Druckbeaufschlagung über die Betriebsbremsleitung 42 auch der Steuereingang 29 des Relaisventils 1 entlüftet ist. Die Steuer- und Entlüftungseinrichtung 48 ist über ein Rückschlagventil 50 mit der Entlüftung verbunden. Folglich sind die Federspeicherbremszylinder 41a, 41b drucklos, so dass sich die Feststellbremse und somit auch das Fahrzeug in einem Parkzustand befinden. Die Steuerleitung 31 ist also drucklos und die Federspeicherbremszylinder 41a, 41b sind geschlossen.

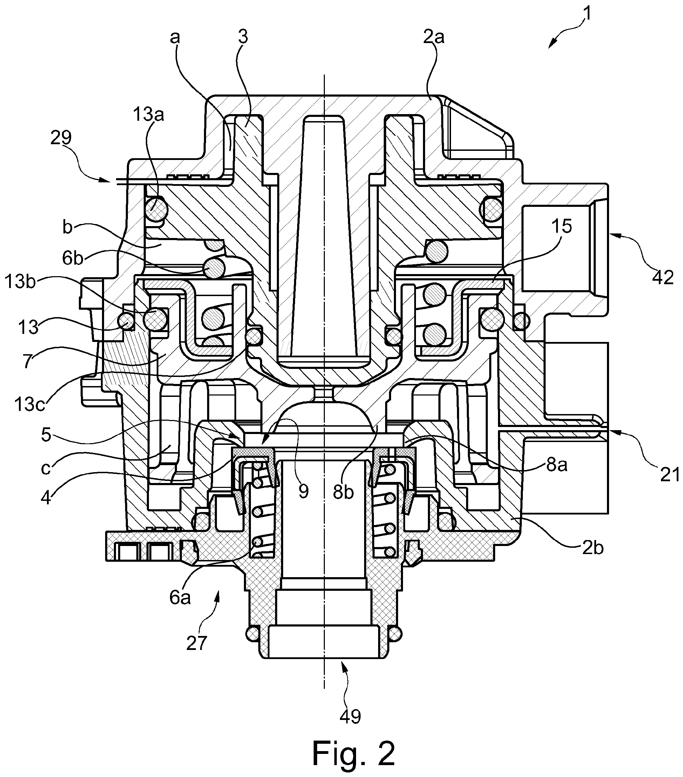

Gemäß Figur 2 weist das Relaisventil 1 einen axial in einem ersten Gehäuseteil 2a eines Gehäuses 2 beweglichen Parkbremskolben 3 und eine axial bewegliche Manschette 4 auf, die in einem zweiten Gehäuseteil 2b des Gehäuses 2 angeordnet ist. Mithin besteht das Gehäuse 2 aus dem ersten Gehäuseteil 2a und dem zweiten Gehäuseteil 2b. Zur pneumatischen Abdichtung der beiden Gehäuseteile 2a, 2b ist ein O-Ring 13 radial dazwischen angeordnet. Zwischen dem Parkbremskolben 3 und dem Gehäuseteil 2a ist eine erste Druckluftkammer a zur Aufnahme von Druckluft aus der Steuerleitung 31 ausgebildet.

Ferner ist ein erstes Federelement 6a vorgesehen, das die Manschette 4 axial mit einer Vorspannkraft beaufschlagt und ein zweites Federelement 6b, das den Parkbremskolben 3 axial mit einer weiteren Vorspannkraft beaufschlagt. Die beiden Federelemente 6a, 6b sind als Druckfedern ausgebildet. Dabei kommt das erste Federelement 6a an einem am zweiten Gehäuseteil 2b angeordneten Federteller 15 zur Anlage. Der Federteller 15 weist eine zentrale Aussparung auf, durch die der Parkbremskolben 3 und ein daran radial und axial zur Anlage kommender Betriebsbremskolben 7 verlaufen.

Der Betriebsbremskolben 7 ist axial beweglich und axial zwischen dem Parkbremskolben 3 und der Manschette 4 angeordnet. Der Parkbremskolben 3 kann ausschließlich über den Betriebsbremskolben 7 auf die Manschette 4 einwirken. Der Parkbremskolben 3 kommt radial am zweiten Gehäuseteil 2b dichtend zur Anlage, um eine zweite Druckluftkammer b auszubilden. Die zweite Druckluftkammer b ist unmittelbar mit Druckluft aus der Betriebsbremsleitung 42, die an der Betriebsbremse 43 angeordnet ist, speisbar. Zur pneumatischen Abdichtung der ersten und zweiten Druckluftkammer a, b ist radial zwischen dem Parkbremskolben 3 und dem ersten Gehäuseteil 2a, sowie radial zwischen dem Betriebsbremskolben 7 und dem zweiten Gehäuseteil 2b, als auch radial zwischen dem Parkbremskolben 3 und dem Betriebsbremskolben 7 jeweils ein O-Ring 13a, 13b, 13c angeordnet.

Eine dritte Druckluftkammer c ist zur Einstellung des Luftdrucks in der Ausgangsleitung 23 zwischen dem Betriebsbremskolben 7, dem zweiten Gehäuseteil 2b und der Manschette 4 ausgebildet. Axial zwischen einem gehäuseseitigen Ventilsitz 8a und der Manschette 4 ist ein pneumatischer Einlass 5 von Druckluft aus der Versorgungsleitung 27 zur Belüftung der dritten Druckluftkammer c ausbildbar. Dazu drückt der Betriebsbremskolben 7 die Manschette 4 axial gegen die Vorspannkraft der Druckfeder 6b, wodurch der Einlass 5 zwischen dem gehäuseseitigen Ventilsitz 8a und der Manschette 4 entsteht. Ferner ist axial zwischen einem am Betriebsbremskolben 7 ausgebildeten Ventilsitz 8b und der Manschette 4 ein pneumatischer Auslass 9 zur Entlüftung der dritten Kammer c ausbildbar. Der pneumatische Auslass 9 wird dadurch geschlossen, dass der Betriebsbremskolben 7 an der Manschette 4 axial zur Anlage kommt. Es kann entweder der pneumatischer Einlass 5 oder der pneumatische Auslass 9 geöffnet sein, jedoch nicht beide gleichzeitig.

### Bezugszeichenliste

- 1: Relaisventil
- 2a, 2b: Gehäuse
- 3: Parkbremskolben
- 4: Manschette
- 5: Einlass
- 6a, 6b: Federelement
- 7: Betriebsbremskolben
- 8a, 8b: Ventilsitz
- 9: Auslass
- 10: Rückschlagventil
- 11: Druckluftaufbereitungsanlage
- 12: Filtereinheit
- 13, 13a-13c: O-Ring
- 14: Versorgungsmagnetventil
- 15: Federteller
- 16a, 16b: Versorgungsleitungsabschnitt
- 17: Anhängersteuerleitungszweig
- 18: Drossel
- 19: Anhängersteuerleitungszweig
- 20: erster Arbeitsanschluss
- 21: Belüftungsanschluss
- 22: Steuerventileinrichtung
- 23: Ausgangsleitung
- 24: zweiter Arbeitsanschluss
- 25: Versorgungsleitung
- 26: Steuereingang
- 27: Versorgungsanschluss
- 28: Steuereingang
- 29: Steuereingang
- 30: Anhängersteuermodul
- 31: Steuerleitung
- 32: Anhängersteuermodul
- 33: Steuereingang
- 34: Versorgungsanschluss
- 35: Steuerleitung
- 36: Steueranschluss
- 37: Select-Low-Ventil
- 38: Versorgungsanschluss
- 39: Steueranschluss
- 40a, 40b: Leitungszweig
- 41a, 41b: Federspeicherbremszylinder
- 42: Betriebsbremsleitung
- 43: Betriebsbremse
- 44: Entlüftungsmagnetventil
- 45: Entlüftungsmagnetventilanschluss
- 46a, 46b: Drucksensor
- 48: Steuer- und Entlüftungsventileinrichtung
- 49: Entlüftung
- 50: Rückschlagventil

- a: erste Druckluftkammer
- b: zweite Druckluftkammer
- c: dritte Druckluftkammer

## Patentansprüche

1. Relaisventil (1) für ein Fahrzeug, umfassend einen axial in einem Gehäuse (2) beweglichen Parkbremskolben (3) und einer axial beweglichen Manschette (4), wobei zwischen dem Parkbremskolben (3) und dem Gehäuse (2) eine erste Druckluftkammer (a) zur Aufnahme von Druckluft aus einer Steuerleitung (31) ausgebildet ist, wobei ferner ein erstes Federelement (6a) vorgesehen ist, das die Manschette (4) axial mit einer Vorspannkraft beaufschlagt, und wobei ein zweites Federelement (6b) vorgesehen ist, das den Parkbremskolben (3) axial mit einer weiteren Vorspannkraft beaufschlagt,
**dadurch gekennzeichnet, dass** axial zwischen dem Parkbremskolben (3) und der Manschette (4) ein axial beweglicher Betriebsbremskolben (7) angeordnet ist, der zumindest radial an dem Parkbremskolben (3) und radial am Gehäuse (2) dichtend zur Anlage kommt, um eine zweite Druckluftkammer (b) auszubilden.

2. Relaisventil (1) nach Anspruch 1,
**dadurch gekennzeichnet, dass** die zweite Druckluftkammer (b) unmittelbar mit Druckluft aus einer Betriebsbremsleitung (42), die an einer Betriebsbremse angeordnet ist, speisbar ist.

3. Relaisventil (1) nach Anspruch 1,
**dadurch gekennzeichnet, dass** eine dritte Druckluftkammer (c) zur Einstellung des Luftdrucks in einer über einen Belüftungsanschluss (21) verbundenen Ausgangsleitung (23) zwischen dem Betriebsbremskolben (7), dem Gehäuse (2) und der Manschette (4) ausgebildet ist.

4. Relaisventil (1) nach Anspruch 3,
**dadurch gekennzeichnet, dass** axial zwischen einem gehäuseseitigen Ventilsitz (8a) und der Manschette (4) ein pneumatischer Einlass (5) von Druckluft aus einer über einen Versorgungsanschluss (27) verbundenen Versorgungsleitung (25) zur Belüftung der dritten Kammer (c) ausbildbar ist.

5. Relaisventil (1) nach Anspruch 3,
**dadurch gekennzeichnet, dass** axial zwischen einem am Betriebsbremskolben (7) ausgebildeten Ventilsitz (8b) und der Manschette (4) ein pneumatischer Auslass (9) zur Entlüftung der dritten Druckluftkammer (c) ausbildbar ist.

6. Verfahren zum Betrieb eines Relaisventils (1) nach einem der Ansprüche 1-5,
**dadurch gekennzeichnet, dass** bei einem Parkzustand des Fahrzeugs die Steuerleitung (31), die Betriebsbremsleitung (42) und die Ausgangsleitung (23) drucklos sind, wobei die Manschette (4) axial am gehäuseseitigen Ventilsitz (8a) zur Anlage kommt und der Betriebsbremskolben (7) axial von der Manschette (4) beabstandet ist, so dass über den geöffneten Auslass (9) die dritte Druckluftkammer (c) entlüftet wird.

7. Verfahren nach Anspruch 6,
**dadurch gekennzeichnet, dass** bei einer Betätigung der Betriebsbremse (43) während des Parkzustands des Fahrzeugs der Betriebsbremskolben (7) axial an die Manschette (4) zur Anlage kommt, wobei die Manschette (4) gegen die Vorspannkraft des ersten Federelements (6a) axial verschoben wird, so dass der Einlass (5) geöffnet wird und der Auslass (9) geschlossen wird.

8. Verfahren zum Betrieb eines Relaisventils (1) nach einem der Ansprüche 1-5,
**dadurch gekennzeichnet, dass** bei einem Fahrzustand des Fahrzeugs die Steuerleitung (31), die Versorgungsleitung (25) und die Ausgangsleitung (23) mit Druckluft beaufschlagt werden, wobei der Betriebsbremskolben (7) axial an die Manschette (4) zur Anlage kommt, so dass der Einlass (9) und der Auslass (5) geschlossen werden.

9. Verfahren zum Betrieb eines Relaisventils (1) nach einem der Ansprüche 1-5,
**dadurch gekennzeichnet, dass** der Luftdruck in der ersten Druckluftkammer (a) zur Senkung des an der Ausgangsleitung (23) anliegenden Luftdruckes geregelt gesenkt wird, wobei der Betriebsbremskolben (7) axial von der Manschette (4) abhebt, so dass der Auslass (9) geöffnet wird und die dritte Druckluftkammer (c) geregelt entlüftet wird.

10. Verfahren zum Betrieb eines Relaisventils (1) nach einem der Ansprüche 1-5,
**dadurch gekennzeichnet, dass** der Luftdruck in der ersten Druckluftkammer (a) zur Erhöhung des an der Ausgangsleitung (23) anliegenden Luftdruckes geregelt erhöht wird, wobei der Betriebsbremskolben (7) die Manschette (3) gegen die Vorspannkraft des ersten Federelements (6a) axial verschiebt, so dass der Einlass (5) geöffnet wird und die dritte Druckluftkammer (c) geregelt belüftet wird.

## Claims

1. A relay valve (1) for a vehicle comprising a parking brake piston (3) that is displaceable axially in a housing (2) and an axially displaceable cuff (4), a first compressed air chamber (a) for receiving compressed air from a control line (31) being formed between the parking brake piston (3) and the housing (2), there also being provided a first spring element (6a) that applies a preloading force axially on the cuff (4), and there being provided a second spring element (6b) that applies a further preloading force axially on the parking brake piston (3),
**characterised in that** in order to form a second compressed air chamber (b) there is arranged axially between the parking brake piston (3) and the cuff (4) an axially displaceable service brake piston (7) that comes into contact at least radially with the parking brake piston (3) and radially with the housing (2) so as to form a seal.

2. A relay valve (1) according to claim 1,
**characterised in that** the second compressed air chamber (b) can be fed directly with compressed air from a service brake line (42) that is arranged on a service brake.

3. A relay valve (1) according to claim 1,
**characterised in that** formed between the service brake piston (7), the housing (2) and the cuff (4) is a third compressed air chamber (c) for adjusting the air pressure in an output line (23) that is connected via a venting connection (21).

4. A relay valve (1) according to claim 3,
**characterised in that** a pneumatic inlet (5) for compressed air from a supply line (25) connected via a supply connection (27) for venting the third chamber (c) can be formed axially between a valve seat (8a) on the housing side and the cuff (4).

5. A relay valve (1) according to claim 3,
**characterised in that** a pneumatic outlet (9) for venting the third compressed air chamber (c) can be formed axially between a valve seat (8b) formed on the service brake piston (7) and the cuff (4).

6. A method for operating a relay valve (1) according to any one of claims 1 to 5,
**characterised in that** when the vehicle is parked the control line (31), the service brake line (42) and the output line (23) are depressurised, the cuff (4) coming axially into contact with the housing-side valve seat (8a) and the service brake piston (7) being spaced axially apart from the cuff (4) such that the third compressed air chamber (c) is vented via the open outlet (9).

7. A method according to claim 6,
**characterised in that** if the service brake (43) is actuated while the vehicle is parked, the service brake piston (7) comes axially into contact with the cuff (4), the cuff (4) being displaced axially counter to the pre-loading force of the first spring element (6a) such that the inlet (5) is opened and the outlet (9) is closed.

8. A method for operating a relay valve (1) according to any one of claims 1 to 5,
**characterised in that** when the vehicle is being driven compressed air is applied to the control line (31), the supply line (25) and the output line (23), the service brake piston (7) coming into contact axially with the cuff (4) such that the inlet (9) and the outlet (5) are closed.

9. A method for operating a relay valve (1) according to any one of claims 1 to 5,
**characterised in that** the air pressure in the first compressed air chamber (a) is reduced in a controlled manner in order to reduce the air pressure prevailing at the output line (23), the service brake piston (7) lifting axially off the cuff (4) such that the outlet (9) is opened and the third compressed air chamber (c) is vented in a controlled manner.

10. A method for operating a relay valve (1) according to any one of claims 1 to 5,
**characterised in that** the air pressure in the first compressed air chamber (a) is increased in a controlled manner in order to increase the air pressure prevailing at the output line (23), the service brake piston (7) displacing the cuff (3) axially counter to the preloading force of the first spring element (6a) such that the inlet (5) is opened and the third compressed air chamber (c) is vented in a controlled manner.

## Revendications

1. Vanne (1) relais d'un véhicule, comprenant un piston (3) de frein de stationnement mobile axialement dans une enveloppe (2) et une manchette (4) mobile axialement, dans laquelle, entre le piston (3) de frein de stationnement et l'enveloppe (2), est constituée une première chambre (a) à air comprimé de réception d'air comprimé provenant d'.un conduit (31) de commande, dans laquelle il est prévu, en outre, un premier élément (6a) de ressort, qui applique à la manchette (4) axialement une force de précontrainte et dans laquelle il est prévu un deuxième élément (6b) de ressort, qui applique au piston (3) de frein de stationnement axialement une autre force de précontrainte,
**caractérisée en ce que**, axialement, entre le piston (3) de frein de stationnement et la manchette (4) est disposé un piston (7) de frein de service mobile axialement, qui vient en contact avec étanchéité au moins radialement avec le piston (3) de frein de stationnement et radialement avec l'enveloppe (2) pour constituer une deuxième chambre (b) à air comprimé.

2. Vanne (1) relais suivant la revendication 1,
**caractérisée en ce que** la deuxième chambre (b) à air comprimé peut être alimentée directement en air comprimé à partir d'un conduit (42) de frein de service, qui est monté sur un frein de service.

3. Vanne (1) relais suivant la revendication 1,
**caractérisée en ce qu'**une troisième chambre (c) à air comprimé est constituée entre le piston (7) de frein de service, l'enveloppe (2) et la manchette (4) pour le réglage de la pression de l'air dans un conduit (23) de sortie communiquant par un raccord (21) d'alimentation en air.

4. Vanne (1) relais suivant la revendication 3,
**caractérisée en ce que**, axialement, entre un siège (8a) de vanne du côté de l'enveloppe et la manchette (4), peut être constituée une entrée (5) pneumatique d'air comprimé à partir d'un conduit (25) d'alimentation, communiquant par un raccord (27) d'alimentation, pour l'alimentation en air de la troisième chambre (c).

5. Vanne (1) relais suivant la revendication 3,
**caractérisée en ce qu'**axialement, entre un siège (8b) de vanne constitué sur le piston (7) de frein de service et la manchette (4), peut être constituée une sortie (9) pneumatique pour la purge de la troisième chambre (c) à air comprimé.

6. Procédé pour faire fonctionner une vanne (1) relais suivant l'une des revendications 1 à 5,
**caractérisé en ce que**, dans un état de stationnement du véhicule, le conduit (31) de commande, le conduit (42) de frein de service et le conduit (23) de sortie sont sans pression, la manchette (4) venant s'appliquer axialement au siège (8a) de la vanne du côté de l'enveloppe et le piston (7) de frein de service étant à distance axialement de la manchette (4), de manière à purger la troisième chambre (c) à air comprimé par la sortie (9) ouverte.

7. Procédé suivant la revendication 6,
**caractérisé en ce que**, lors d'un actionnement du frein (43) de service, pendant l'état de stationnement du véhicule, le piston (7) de frein de service vient axialement s'appliquer à la manchette (4), la manchette (4) étant déplacée axialement à l'encontre de la force de contrainte du premier élément (6a) de ressort, de manière à ouvrir l'entrée (5) et à fermer la sortie (9).

8. Procédé pour faire fonctionner une vanne (1) relais suivant l'une des revendications 1 à 5,
**caractérisé en ce que**, dans un état de marche du véhicule, le conduit (31) de commande, le conduit (25) d'alimentation et le conduit (23) de sortie sont alimentés en air comprimé, le piston (7) de frein de service venant s'appliquer axialement à la manchette (4), de manière à fermer l'entrée (9) et la sortie (5).

9. Procédé pour faire fonctionner une vanne (1) relais suivant l'une des revendications 1 à 5,
**caractérisé en ce que** l'on abaisse d'une manière réglée la pression de l'air dans la première chambre (a) à air comprimé pour abaisser la pression de l'air s'appliquant au conduit (23) de sortie, le piston (7) de frein de service étant soulevé axialement de la manchette (4), de manière à ouvrir la sortie (9) et de manière à purger d'une manière réglée la troisième chambre (c) à air comprimé.

10. Procédé pour faire fonctionner une vanne (1) relais suivant l'une des revendications 1 à 5,
**caractérisé en ce que** l'on élève de manière réglée la pression de l'air dans la première chambre (a) à air comprimé pour élever la pression de l'air s'appliquant au conduit (23) de sortie, le piston (7) de frein de service décalant axialement la manchette (3) à l'encontre de la force de précontrainte du premier élément (6a) de ressort, de manière à ouvrir l'entrée (5) et à alimenter en air de manière réglée la troisième chambre (c) à air comprimé.
